# EUROPÄISCHE PATENTSCHRIFT

(11) **EP 0 975 940 B1**
(45) Veröffentlichungstag und Bekanntmachung des Hinweises auf die Patenterteilung: **02.06.2004**
(21) Anmeldenummer: 98924154.2
(22) Anmeldetag: 20.04.1998
(51) Int. Cl.: G01L 1/20

(54) **Linearer Kraftsensor mit zwei Schichten und zwei Stempeln**
Linear force transducer with two films and two punches
Capteur de force linéaire avec deux films et deux tampons

(30) Priorität: 21.04.1997 DE 19716588
(43) Veröffentlichungstag der Anmeldung: 02.02.2000
(73) Patentinhaber: Van Bergen, Michael, 51643 Gummersbach (DE)
(72) Erfinder: Van Bergen, Michael, 51643 Gummersbach (DE)
(74) Vertreter: Fitzner, Uwe, Dr.
(86) Internationale Anmeldenummer: PCT/EP1998/002327
(87) Internationale Veröffentlichungsnummer: WO 1998/048254

(56) Entgegenhaltungen:
- DE-A- 3 912 280
- DE-C- 4 221 426
- FR-A- 2 648 559

## Beschreibung

Kraft- und Drucksensoren lassen sich besonders anpassungsfähig in der Form und preisgünstig aus piezoresistiven, elektrischen Schichten in einer der bekannten Schichttechniken herstellen, z.B. durch Aufschmelzen in Dickschichttechnik, durch Aufdampfen in Dünnschichttechnik, durch Aufkleben usw. Bei einer Reihe bekannter Anordnungen, wie z.B. der EP 0 190 270 B1 und der DE 38 18 190 A1, ist vorgesehen, die zu messenden Kräfte bzw. Drücke direkt auf die piezoresistive Schicht einwirken zu lassen, wobei vorteilhafterweise der für die ebenfalls bekannten Kraftsensoren mit Dehnungsmeßelementen erforderliche Verformungskörper entfällt. Im Bereich der technischen Kraftmessung mit mechanisch hartem, vorwiegend aus Stahl gefertigtem Krafteinleitungsteil hat sich jedoch von den Anordnungen dieser Art bisher keine gegen die konkurrierenden Einrichtungen mit Verformungskörpem oder mit piezoelektrischen Scheiben durchgesetzt, weil entweder gar kein entsprechender Krafteinleitungsteil in den Anordnungen enthalten ist, wie z.B. in der DE 43 00 995 A1 u. a. oder der angegebene Krafteinleitungsteil für den genannten Anwendungsbereich nicht vorgesehen bzw. nicht geeignet ist. Die Gründe dafür liegen in den speziellen Problemen, die auftreten, wenn ein aus vergleichsweise hartem und zähem Werkstoff wie Stahl bestehender Krafteinleitungsteil auf Schichten drückt, die spröde sind oder unter mechanischer Spannung zu Rißbildung neigen. Wie aus K. Girkmann, Flächentragwerke, Springer-Verlag (1963) S. 72 u.a. hervorgeht, führen die eingeleiteten Kräfte in der Schicht unter den Kanten von Krafteinleitungsteilen zu Sprüngen bzw. Spitzen in der Normal- und Tangential-Spannungsverteilung, die umso steiler bzw. höher sind, je scharfkantiger der Krafteinleitungsteil ist und je mehr die Querdehnung an der Krafteinleitungsfläche durch Reibung zwischen dem Krafteinleitungsteil und der Unterlage behindert wird. In der Unterlage treten dabei unter dem Krafteinleitungsteil Druckspannungen und neben dem Krafteinleitungsteil Zugspannungen auf. Um unerwünschte Spannungen zu vermeiden, kann man die drucksensitiven Elemente, wie z.B.in den DE 33 33 285 A1 und DE 41 42 141 A1, im Kraftnebenschluß. anordnen, wodurch aber nachteilig die Empfindlichkeit der Anordnung herabgesetzt wird.
Die schmalen Randzonen in den Schichten direkt unter und neben den Kanten eines Krafteinleitungsteils, wie er z.B. in der DE 39 12 280 A1 beschrieben ist, erfahren jedenfalls erhebliche mechanische Beanspruchungen, die im Zugspannungsbereich dicht neben den Kanten des Krafteinleitungsteils besonders nachteilig sind, weil die Zugspannungsfestigkeit von Dickschichtmaterial um mehr als eine Zehnerpotenz kleiner ist als seine Druckfestigkeit. Bei andauernden dynamischen Belastungen beginnt in diesen Randzonen die Rißbildung in der Schicht, die sich ungünstig auf die Langzeitstabilität des Sensors auswirkt.
Aus der DE 38 18 191 A1 und der DE 42 21 426 C1 sind ferner Kraftsensoren bekannt, bei denen das Krafteinleitungsteil auch auf die Bereiche der Schichten drückt, die die Leiterbahnen überlappen. Da in diesem Überlappungsbereich die Schicht eingeleitete Kraftanteil eine Widerstandsänderung, die nicht festgestellt wird, d.h. also einen nicht mitgemessenen Kraftnebenschluß. Außerdem ist bei diesen Anordnungen von Nachteil, daß die im Sensorelement aufgrund der dreidimensionalen Elastizität auftretenden Querdehnungen (senkrecht zur Kraftrichtung) zu Querkräften auf die Leiterbahnen führen und andererseits innerhalb der Widerstandsbahnen Querdehnungsbehinderungen durch die eingrenzenden Leiterbahnen entstehen.

Aus der DE 42 21 426 C1 ist ferner eine Variante eines Drucksensors bekannt, bei der die Schicht die Leiterbahnen und darüber hinaus einen zwischen diesen befindlichen Auflagebereich überdeckt, welcher höher als die Leiterbahnen ist. Durch das Überstehen des Krafteinleitungsteils über den Auflagebereich wird erreicht, daß dessen Kanten nicht störende oder schädigende Wirkungen auf die Schicht ausüben können. Nachteilig bei dieser Anordnung ist jedoch, daß ein eigener Auflagebereich gefertigt werden muß, dessen Höhe die der Leiterbahnen so deutlich übersteigt, daß es bei allen denkbaren Belastungen nicht zu einem Aufsetzen des Krafteinleitungsteils auf den Leiterbahnen kommt. Das Krafteinleitungsteil bekommt hierdurch einen erhöhten Abstand zum Trägerkörper, welcher die Stabilitätseigenschaften der Anordnung verschlechtert.

Aus der FR-A-2648559 ist ein Kraftsensor bekannt, bei dem zwischen einem Krafteinleitungsteil und dem Sensor ein elastisches Kissen eingesetzt ist, um Druckspitzen dadurch zu vermeiden, dass es durch seine Elastizität die Unebenheiten der Krafteinleitungsteile und des Sensorelements ausgleicht. Je nach Krafteinwirkung wird das Kissen mehr oder weniger nachgeben bis zu dem Punkt, an dem alle Unebenheiten der Oberfläche des Krafteinleitungsteils und des Sensors ausgefüllt sind. Bei steigender Kraft wird das Kissen nur noch seitlich ausweichen. Dieser Sensor hat den Nachteil, dass das elastische Verhalten zu einer Verschlechterung der mit dem Sensor erzielbaren Messgenauigkeit führt.

Der Erfindung liegt nun die Aufgabe zugrunde, einen Kraftsensor enthaltend einen Träger (4), eine drucksensitive Schicht (1a), die über dem Träger (4) angeordnet ist und die mit einer Leiterbahn (3a) verbunden ist, einen Krafteinleitungsteil (5a) mit einer durch Kanten begrenzten Kontaktfläche, die im Auflagebereich mit der Schicht (1a) in Verbindung steht, anzugeben, bei dem Kraftnebenschlüsse, Querdehnungsbehinderungen und Rißbildung wegen Kanteneinwirkung der Krafteinleitungsteile durch geeigneten Aufbau so weit wie möglich ausgeschlossen werden. Ferner soll die Meßpräzision des Kraftsensors verbessert werden. Schließlich sollen die bei Einseitiger Beschichtung auftretenden Blechwölbungen und Quereffekte vermieden werden.

Diese Aufgabe wird durch einen Kraftsensor gelöst, enthaltend
a) einen Träger (4),
b) eine drucksensitive Schicht (1a), die auf dem Träger (4) angeordnet ist und die mit mindestens einer Leiterbahn (3a) verbunden ist,
c) einen Krafteinleitungsteil (5a) mit einer durch mindestens eine Kante begrenzten Kontaktfläche, die im Auflagenbereich (2a) mit der Schicht (1 a) steif in Verbindung steht,
wobei auf dem Träger (4) eine zweite drucksensitive Schicht (1 b) angeordnet ist, die mit mindestens einer Leiterbahn (3b)
verbunden ist, und wobei ein zweites Krafteinleitungsteil (5b)
im Auflagenbereich (2b) einer durch mindestens eine Kante begrenzten Kontaktfläche mit der zweiten drucksensitiven Schicht (1b) steif in Verbindung steht.

Die erfindungsgemäßen Kraftsensoren enthalten demgemäß einen Träger, der dem Aufbau des gesamten Elementes dient, sowie zwei drucksensitive Schichten, die über dem Träger angeordnet sind und die mit Leiterbahnen verbunden sind. Dabei können zwischen Träger und Schichten ggf. weitere Materialschichten angeordnet sein. Ferner enthalten die Kraftsensoren Krafteinleitungsteile mit durch Kanten begrenzten Kontaktflächen, die im Auflagebereich mit den Schichten in Verbindung stehen. Die Krafteinleitungsteile können je nach Anforderung der Anwendung nahezu beliebige Form haben. Über ihre Außenflächen, die Kontaktflächen, haben sie (direkt oder über Zwischenschichten) Verbindung zu den drucksensitiven Schichten des Trägers, wobei der Kontakt allerdings nur über den Innenbereich der Kontaktfläche stattfindet, d.h. nicht über die Kanten. Hierdurch werden Beschädigungen der drucksensitiven Schicht des Trägers durch die Kanten vermieden.

Die den Krafteinleitungsteilen zugewandten Oberflächen der Schichten des Trägers können nutenförmige Vertiefungen aufweisen, über welchen die Kanten der Kontaktfläche berührungsfrei liegen. Im Gegensatz zum Stand der Technik ist es also nicht erforderlich, einen Auflagebereich vorzusehen, der höher als die Leiterbahnen ist. Vielmehr können auf dem Träger drucksensitive Schichten angeordnet sein, die eine - bis auf die Nuten - einheitliche, gleichmäßige Höhe haben.

Auf dem Träger des Kraftsensors können auch (ein- oder mehrtägiger) erhöhte Auflagebereiche und mit Zwischenräumen von diesen beabstandet Leiterbahnen angeordnet sein, wobei Leiterbahnen, Zwischenräume und Auflagebereiche von den Schichten derart überdeckt sind, daß über den Zwischenräumen die nutenförmigen Vertiefungen gebildet werden. Vorzugsweise sind die Auflagebereiche dabei einstückig aus dem Material des Trägers gebildet.

Die Leiterbahnen können auch ganzflächig zwischen Träger und drucksensitiven Schichten angeordnet sein. Bei einer derartigen Anordnung fließt der elektrische Strom, der durch die Leiterbahnen in die Schichen geleitet wird, orthogonal durch die Schichten, d.h. in der Regel in Richtung der Einwirkung der Druckkraft. Vorzugsweise wird dabei mindestens eine der Leiterbahnen durch das elektrisch leitfähige Material des Trägers gebildet. Zum Ausgleich von Unregelmäßgikeiten der Oberflächen geschieht dies vorzugsweise unter Zwischenschaltung von geeigneten Ausgleichsschichten.

Bei dem erfindungsgmäßen Sensor handelt es sich also um eine "Sandwich"-Bauweise, bei welcher auf dem Träger zwei drucksensitive Schichten angeordnet sind, die mit Leiterbahnen verbunden sind, und bei welcher zwei Krafteinleitungsteile an den Innenbereichen von durch Kanten begrenzten Kontaktflächen mit den zwei drucksensitiven Schichten in Verbindung stehen. Der Träger ist in der Regel so klein ausgebildet, daß die auf diesem angeordneten Meßeinheiten räumlich eng zusammenliegen.

Die mechanische und elektrische Kopplung von zwei Meßeinheiten bringt erhebliche Präzisionsvorteile. Denkbar ist auch, die "Sandwich"-Bauweise mehrfach anzuwenden, so daß an dasselbe Zwischenelement nicht nur zwei, sondern mehrere Sensoren-Untereinheiten angekoppelt sind.

Die drucksensitiven Schichten auf dem Träger können aus einem Material bestehen, das in Abhängigkeit vom einwirkenden Druck ein elektrisches Signal liefert. Hierbei kann es sich beispielsweise um ein piezoelektrisches oder piezoresistives Material oder ein Halbleitermaterial handeln. Vorteilhafterweise ist dies eines, das serienmäßig in der Halbleiterfertigung eingesetzt wird, wie z.B. eine Scheibendiode.

Ferner können die Krafteinleitungsteile und/oder der Träger mit einer isolierenden Beschichtung versehen sein. Dies ist insbesondere dann der Fall, wenn die genannten Elemente selbst aus einem elektrisch leitfähigen Material bestehen.

Für die Beschichtung können isolierende Verbindungsmaterialien wie z.B. Kleber mit zeitabhängigem Aushärteprozeß oder Glas-Keramikfolien, sogenannte "Ceramic-tapes" benutzt werden, damit vor dem Aushärten bzw. Brennen vorteilhafterweise die gesamte Sensor-Anordnung planparallel aufeinandergepreßt werden kann.

Ebenso können als Materialien des Trägers isolierende Verbindungsmaterialien, z.B. Kleber mit zeitabhängigem Aushärteprozeß oder Glas-Keramikfolien (sogenannte "Ceramic-tapes") benutzt werden. Auch hierbei kann vor dem Aushärten bzw. Brennen vorteilhafterweise die gesamte Sensor-Anordnung planparallel aufeinandergepreßt werden.

Ausführungsbeispiele der Erfindung sind in den Zeichnungen dargestellt.
- Fig. 1: zeigt die "Sandwich"-Bauweise mit mittigem Träger.
- Fig. 2: zeigt zwei Zwischenstufen der Herstellung des Kraftsensors.
- Fig. 3: zeigt ein Sensorelement mit unterlegter Leiterbahn.
- Fig. 4: zeigt Vergleichsmessungen von ein-/zweiseitigen Sensoren.

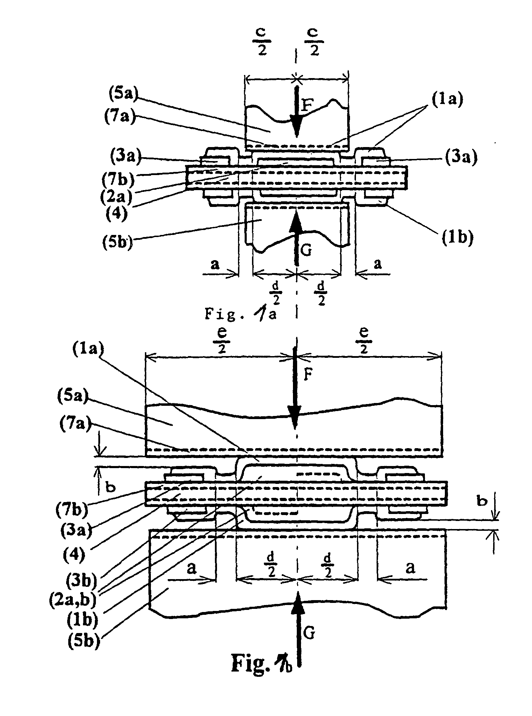

Fig. 1 zeigt einen Kraftsensor mit drucksensitiver Schicht 1a,b, Auflagebereichen 2a,b, Leiterbahnen 3a,b, Träger - sogenanntes Substrat - 4 und Krafteinleitungsteilen 5a,b, sowie Isolierschichten 7,b für den Fall, daß Substrat und Krafteinleitungsteile aus leitfähigem Material wie z.B. Stahl bestehen.

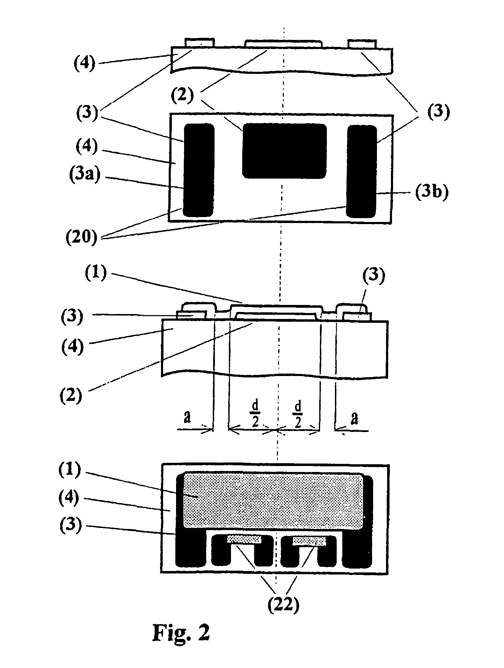

Fig. 2 zeigt die Anordnung von Leiterbahnen 3 mit den Lötkontaktflächen 8 auf den Leiterbahnenden und Auflagebereich 2 auf dem Träger 4 sowie die Schichtenfolge mit drucksensitiver Schicht 1 über dem Auflagebereich 2 und überlappend auf den Leiterbahnen 3, ferner das mögliche, zusätzliche Aufbringen von elektrischen Bauelementen wie z.B. von Vergleichswiderständen ohne Auflagebereich 2 auf dem Träger 4.

Der ebene Träger 4 besteht entweder ganz aus elektrisch isolierendem Material, z.B. Al₂O₃, oder aus einer mit elektrisch isolierendem Material 7b vorbeschichteten Träger. Auf diesen Träger werden zunächst die Auflagebereiche 2 und die Leiterbahnen 3 aufgetragen, wie in Fig. 2 dargestellt. Die Leiterbahnen dienen zum Anschluß des Sensors mit den Leiterbahnenden über Lötpunkte 8 durch Kabelanschluß an die äußere Meßschaltung. Wie Fig. 2 zeigt, wird auf den Träger 4 mit Leiterbahnen 3 und Auflagebereich 2 dann die piezoresistive, drucksensitive Schicht 1 aufgebracht und zwar so, daß durch Überlappung mit den Leiterbahnen 3 ein Kontakt zu diesen entsteht.

Fig. 1 zeigt, wie schließlich die Krafteinleitungsteile 5a,b mit durch einen Pfeile angedeuteten Kräften F und G auf die piezoresistiven Schichten drücken. Falls die Krafteinleitungsteile 5a,b nicht aus elektrisch isolierendem Material bestehen, müssen sie vorher mit elektrisch isolierendem Material vorbeschichtet sein, da sie sonst die drucksensitiven Schichten 1a,b elektrisch überbrücken würden.

Damit die Kanten der Krafteinleitungsteile 5a,b gemäß Fig. 1a freiliegend sind, müssen die Krafteinleitungsteile bei mittiger Lage in ihrer Abmessung c immer kleiner sein als d + 2a (d = Breite der kontaktierten Schicht; a = Breite der Vertiefungsnut) , damit sie nicht auf den überlappten Leiterbahnen 3a,b aufliegen. Die aufgetragenen drucksensitiven Schichten 1a,b sollen bei allen Beschichtungsverfahren im Bereich d der Krafteinwirkung planparallel zum Träger 4 verlaufen, was je nach Beschichtungsverfahren durch Anpressen mit Hilfe der Krafteinleitungsplatte oder einer Bearbeitungsplatte erreicht wird, solange die drucksensitiven Schichten 1a,b noch nicht ausgehärtet bzw. gebrannt sind.

Fig. 1 zeigt in a und b zwei Ausführungen mit spiegelbildlich zweiseitig aufgetragener Sensoranordnung auf Ober- und Unterseite einer Trägers 4.

Bei Verwendung von Blechen für die Träger 4 kann der erwünschte Effekt der Stauchung infolge orthogonaler Druckkraft im piezoresistiven Material durch Quereffekte aufgrund von Rückbiegung der Blechwölbungen überlagert werden. Wölbungen entstehen beispielsweise beim Erkalten nach einseitigem Auftragen der vorgeschlagenen Beschichtung wegen der unterschiedlichen Ausdehnungskoeffizienten zwischen Blech und Beschichtungsmaterial. Andere Ursachen für Blechverwölbungen, die unabhängig von der Beschichtung vorhanden sind, treten z.B. in gewalzten Blechen in Folge des Walzvorganges auf und sind u.a. von der Walzrichtung abhängig.

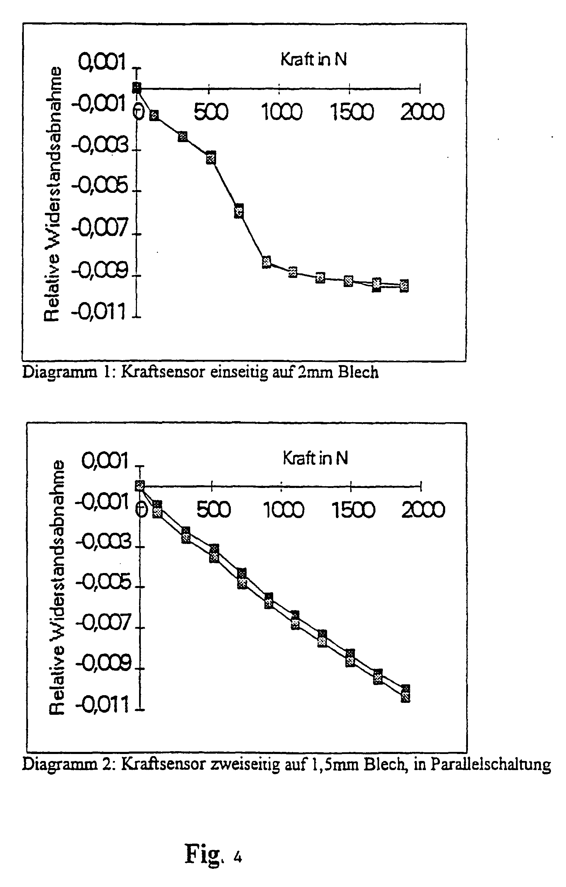

Leitet man die Kraft über Krafteinleitungsteile in einen Sensor ein, der eine einseitige Beschichtung auf einem Träger aufweist, so bildet sich zunächst die Blechwölbung zurück. Dabei entstehen zusätzliche Stauchungen bzw. Dehnungen in den Schichten an der Ober-, bzw. Unterseite der Träger. Bei von Null aus ansteigender Kraft ist infolgedessen zunächst eine große Widerstandsänderung im piezoresistiven Material festzustellen, die stark streut und von Walzrichtung und den unterschiedlichen Ausdehnungskoeffizienten von Blech und Keramik abhängt (Diagramm 1 in Fig. 4; horizontale Achse = Kraft [N], vertikale Achse = relative Widerstandsänderung; einseitiger Kraftsensor auf 2 mm Blech).

Mit zunehmender Kraft überwiegt der rein orthogonale Effekt und die Empfindlichkeit geht zurück. Diese Sensorausführung ist wegen der starken Nichtlinearität und schlechten Reproduzierbarkeit sehr ungünstig.

Mit dem Träger 4, der gemäß Figur 1 auf Ober- und Unterseite je mit dem spiegelbildlich gleichen Sensoraufbau beschichtet wurde, sind die bei einseitiger Beschichtung auftretenden zusätzlichen Blechverwölbungen nicht mehr zu beobachten. Ferner lassen sich die Widerstandsänderungen, die durch Rückbiegen von weiteren Verwölbungen anderer Ursache entstehen, dadurch eliminieren, daß ein Sensor auf der Oberseite mit einem spiegelbildlich auf der Unterseite angeordneten Sensor in Reihe oder parallel geschaltet wird. Derartig aufgebaute und verschaltete Sensoren zeigen die vorher beschriebenen Quereffekte nicht mehr (Diagramm 2 in Figur 4; zweiseitiger Kraftsensor auf 1,5 mm Blech).

Durch die Einhaltung eines hinreichenden Abstandes a derart, daß auch bei Höchstlast a nicht zu Null werden kann, ist sichergestellt, daß Querdehnungsbehinderungen weitgehend unterbunden sind.

Die Kanteneinwirkung der Krafteinleitungsteile 5a,b auf die drucksensitiven Schichten 1a,b gemäß Fig. 1b wird durch mittige Lage und geeignete Längsabmessungen der Krafteinleitungsteile vermieden, deren Längen c auch bei Höchstlast größer sind als die Länge d des erhöht liegenden Bereichs der piezoresistiven drucksensitiven Schichten 1a,b, was sinngemäß auch für die Tiefenabmessungen gilt.

Um Kraftnebenschlüsse über die Bereiche der drucksensitiven Schichten 1a,b zu vermeiden, die die Leiterbahnen 3a,b überlappen, sind die Längen c gemäß Fig. 1a immer kleiner als d + 2a. Diese Begrenzung ist natürlich sinngemäß auch für die Tiefenabmessung erforderlich.

Die Einhaltung eines genügend großen Abstandes b gemäß Fig. 1b der auch bei Höchstlast nicht Null werden darf, gewährleistet; daß kein Kraftnebenschluß über die von Schichten überlappten Bereiche der Leiterbahnen möglich ist.

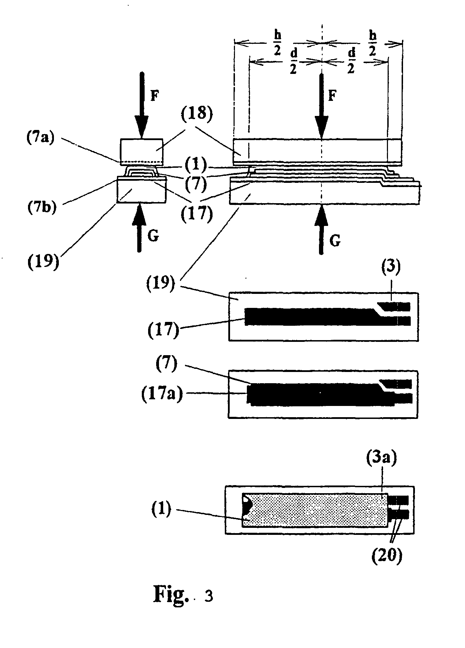

Die Auflagebereiche 2a,b können grundsätzlich in allen Ausführungen, aus ein- oder mehrlagigem elektrisch isolierendem Material bestehen. Sie können auch ein- oder mehrlagig aus dem gleichen piezoelektrischen Widerstandsmaterial bestehen wie die drucksensitive Schichten 1a,b. Das Doppeltdrucken von Widerständen ist z.B. in der Dickschichttechnik ein übliches Verfahren. Im letzen Fall sind die drucksensitiven Schichten 1a,b und Auflagenbereiche 2a,b elektrisch parallelgeschlossen, so daß ihr Gesamtwiderstand niedriger wird als der Widerstand der drucksensitiven Schichten 1a,b alleine.
Schließlich können die Auflagebereiche 2a,b aber auch aus zwei oder mehr Schichten verschiedenen Materials bestehen, z. B. aus einer oder mehreren Leiterbahn(en) und einer oder mehreren darübergelegten isolierenden Schicht(en). Das hat den Vorteil, daß die unterlegte(n) Leiterbahn(en) in Platz sparender Weise zugleich als Anschlußleitung für den Sensor dienen, wie das Anwendungsbeispiel in Fig. 3 zeigt. Die Leiterbahn 3a, die als Zuleitung zu dem räumlich entfernteren Anschluß der drucksensitiven Schicht 1 führt, ist hier unter eine Isolierschicht 7 gelegt. Wenn nach dem Beschichten die drucksensitive Schicht 1 die freie Kontaktfläche überdeckt ist, wird die elektrische Durchverbindung mit der Leiterbahn 3 hergestellt. Auf diese Weise können vorteilhafterweise Sensorelemente mit beiden elektrischen Anschlußkontakten 8 an einer Stirnseite hergestellt werden, was besonders für Matrixanordnungen günstig ist.

## Patentansprüche

1. Kraftsensor, enthaltend
a) einen Träger (4),
b)eine drucksensitive Schicht (1a), die auf dem Träger (4)angeordnet ist und die mit mindestens einer Leiterbahn (3a) verbunden ist,
c)einen Krafteinleitungsteil (5a) mit einer durch mindestens eine Kante begrenzten Kontaktfläche, die im Auflagenbereich (2a) mit der Schicht (1a) steif in Verbindung steht,
wobei auf dem Träger (4) eine zweite drucksensitive Schicht (1b) angeordnet ist, die mit mindestens einer Leiterbahn (3b) verbunden ist, und
wobei ein zweites Krafteinleitungsteil (5b) im Auflagenbereich (2b) einer durch mindestens eine Kante begrenzten Kontaktfläche mit der zweiten drucksensitiven Schicht (1b) steif in Verbindung steht.

2. Kraftsensor nach Anspruch 1, wobei
die dem Krafteinleinleitungsteilen (5a,b) zugewandten Oberflächen der drucksensitiven Schichten (1a,b) nutenförmige Vertiefungen aufweisen, über welchen die Kanten der Kontaktflächen berührungsfrei liegen.

3. Kraftsensor nach Anspruch 1 oder 2, wobei
auf dem Träger (4) ein- oder mehrlagige erhöhte Auflagebereiche (2a,b) mit Zwischenräumen von diesen beabstandet die Leiterbahnen (3a,b) angeordnet sind, wobei Leiterbahnen (3a,b), Zwischenräume und Auflagebereiche (2a,b) von den Schichten (1a,b) derart überdeckt sind, daß über dem Zwischraum die nutenförmigen Vertiefungen gebildet sind.

4. Kraftsensor nach nur einem der Ansprüche 1 bis 3, wobei
die Auflagebereiche (2a, b) einstückig aus dem Material des Trägerrs (4) gebildet sind.

5. Kraftsensor nach einem der Ansprüche 1 bis 4, wobei
sich die Leiterbahnen (3a,b) ganzflächig zwischen drucksensitiven Schichten(1a,b) und Träger (4) befinden.

6. Kraftsensor nach einem der Ansprüche 1 bis 5, wobei
mindestens eine der Leiterbahnen (3a,b) durch das elektrisch leitfähige Material der Krafteinleitungsteile (5a,b) oder des Trägers (4) gebildet wird.

7. Kraftsensor nach einem der Ansprüche 1 bis 6, wobei
er bezüglich einer durch den Träger (4) gehenden Ebene symmetrisch aufgebaut ist.

8. Kraftsensor nach einem der Ansprüche 1 bis 7, wobei
die drucksensitiven Schichten (1a,b) aus einem piezoelektischen, piezoresistiven Material oder einem Halbleitermaterial bestehen.

9. Kraftsensor nach einem der Ansprüche 1 bis 8, wobei
die Krafteinleitungsteile (5a,b) und/oder Träger (4) mit Isolierschichten (7a, 7b) versehen sind.

10. Kraftsensor nach Anspruch 9, wobei
für die Isolierschichten (7a,b) isolierende Verbindungsmaterialien, vorzugsweise Kleber mit zeitabhängigem Aushärteprozeß oder Glas-Keramikfolien benutzt werden.

11. Kraftsensor nach einem der Ansprüche 1 bis 9, wobei
die Krafteinleitungsteile (5a,b) isolierende Verbindungsmaterialien, vorzugsweise. Kleber mit zeitabhängigem Aushärteprozeß oder Glas-Keramikfolien enthalten.

12. Kraftsensor nach einem der Ansprüche 1 bis 11, wobei der
Träger (4) isolierende Verbindungsmaterialien, vorzugsweise Kleber mit zeitabhängigem Aushärteprozeß oder Glas-Keramikfolien enthält.

## Claims

1. Force sensor, containing
a) a support (4),
b) a pressure-sensitive layer (1a), which is arranged on the support (4) and is connected to at least one conductor track (3a),
c) a force-introduction part (5a) with a contact area which is bounded by at least one edge and is rigidly connected to the layer (1a) in the bearing region (2a),
a second pressure-sensitive layer (1b), which is connected to at least one conductor track (3b), being arranged on the support (4), and
a second force-introduction part (5b) being rigidly connected to the second pressure-sensitive layer (1b) in the bearing region (2b) of a contact area bounded by at least one edge.

2. Force sensor according to Claim 1,
those surfaces of the pressure-sensitive layers (1a, b) which face the force-introduction parts (5a, b) having grooved depressions above which the edges of the contact areas lie in a manner free from contact.

3. Force sensor according to Claim 1 or 2,
single-layer or multilayer elevated bearing regions (2a,b) and, spaced apart from the latter by interspaces, the conductor tracks (3a, b) being arranged on the support (4), conductor tracks (3a, b), interspaces and bearing regions (2a, b) being covered by the layers (1a, b) in such a way that the grooved depressions are formed above the interspace.

4. Force sensor according to only one of Claims 1 to 3,
the bearing regions (2a, b) being formed integrally from the material of the support (4).

5. Force sensor according to one of Claims 1 to 4,
the conductor tracks (3a, b) having their whole areas situated between pressure-sensitive layers (1a,b) and support (4).

6. Force sensor according to one of Claims 1 to 5,
at least one of the conductor tracks (3a, b) being formed by the electrically conductive material of the force-introduction parts (5a,b) or of the support (4).

7. Force sensor according to one of Claims 1 to 6,
it being constructed symmetrically with respect to a plane passing through the support (4).

8. Force sensor according to one of Claims 1 to 7,
the pressure-sensitive layers (1a, b) being composed of a piezoelectric, piezoresistive material or a semiconductor material.

9. Force sensor according to one of Claims 1 to 8,
the force-introduction parts (5a, b) and/or support (4) being provided with insulating layers (7a, b).

10. Force sensor according to Claim 9,
insulating joining materials, preferably adhesives with a time-dependent curing process or glass ceramic sheets being used for the insulating layers (7a, b).

11. Force sensor according to one of Claims 1 to 9,
the force-introduction parts (5a, b) containing insulating joining materials, preferably adhesives with a time-dependent curing process or glass ceramic sheets.

12. Force sensor according to one of Claims 1 to 11,
the support (4) containing insulating joining materials, preferably adhesives with a time-dependent curing process or glass ceramic sheets.

## Revendications

1. Capteur de force, qui contient:
a) un support (4),
b) une couche (1a) sensible à la pression qui est disposée sur le support (4) et qui est reliée à au moins une piste conductrice (3a),
c) une pièce (5a) d'application de force dont la surface de contact est délimitée par au moins une arête et qui est reliée rigidement à la couche (1a) dans la zone d'appui (2a),
une deuxième couche (1b) sensible à la pression étant disposée sur le support (4), étant reliée à au moins une piste conductrice (3b), et une deuxième pièce (5b) d'application de force étant en liaison, rigide avec la deuxième couche (1b) sensible à la pression dans la zone d'appui (2b) d'une surface de contact délimitée par au moins une arête.

2. Capteur de force selon la revendication 1, dans lequel les surfaces des couches (1a,b) sensibles à la pression qui sont tournées vers les pièces (5a,b) d'application de force présentent des creux en forme de rainures au-dessus desquels les bords des surfaces de contact sont placés sans se toucher.

3. Capteur de force selon la revendication 1 ou 2, dans lequel, sur le support (4), des zones d'appui (2a, b) plus élevées, en une ou plusieurs couches, avec espaces intermédiaires, sont disposées à distance des pistes conductrices (3a,b), les pistes conductrices (3a,b), les espaces intermédiaires et les zones d'appui (2a,b) étant recouvertes par les couches (1a,b) de manière à former les creux en forme de rainures au-dessus de l'espace intermédiaire.

4. Capteur de force selon une seule des revendications 1 à 3, dans lequel les zones d'appui (2a,b) sont formées d'une seule pièce du matériau du support (4).

5. Capteur de force selon l'une des revendications 1 à 4, dans lequel les pistes conductrices (3a,b) sont situées sur toute leur surface entre les couches (1a, b) sensibles à la pression et le support (4).

6. Capteur de force selon l'une des revendications 1 à 5, dans lequel au moins l'une des pistes conductrices (3a,b) est formée du matériau électriquement conducteur des pièces (5a,b) d'application de force ou du support (4).

7. Capteur de force selon l'une des revendications 1 à 6, qui présente une structurel symétrique par rapport à un plan qui passe par le support (4).

8. Capteur de force selon l'une des revendications 1 à 7, dans lequel les couches (1a,b) sensibles à la pression sont constituées d'un matériau piézo-électrique, piézo-résistif ou semi-conducteur.

9. Capteur de force selon l'une des revendications 1 à 8, dans lequel les pièces (5a,b) d'application de force et/ou le support (4) sont dotés de couches isolantes (7a,7b).

10. Capteur de force selon la revendication 9, dans lequel on utilise pour les couches isolantes (7a,b) des matériaux de liaison isolants, de préférence des adhésifs à durcissement progressif ou des feuilles en vitrocéramique.

11. Capteur de force selon l'une des revendications 1 à 9, dans lequel les pièces (5a,b) d'application de force contiennent des matériaux de liaison isolants, de préférence des adhésifs à durcissement progressif ou des feuilles en vitrocéramique.

12. Capteur de force selon l'une des revendications 1 à 11, dans lequel le support (4) contient des matériaux de liaison isolants, de préférence des adhésifs à durcissement progressif ou des feuilles en vitrocéramique.
